# EUROPÄISCHE PATENTSCHRIFT

(11) **EP 0 487 944 B1**
(45) Veröffentlichungstag und Bekanntmachung des Hinweises auf die Patenterteilung: **26.01.1994**
(21) Anmeldenummer: 91118778.9
(22) Anmeldetag: 04.11.1991
(51) Int. Cl.: F16K 17/04

(54) **Sicherheitsventil**
Safety valve
Soupape de sécurité

(30) Priorität: 28.11.1990 DE 4037905
(43) Veröffentlichungstag der Anmeldung: 03.06.1992
(73) Patentinhaber: Herion-Werke KG, D-70736 Fellbach (DE)
(72) Erfinder: Breyer, Karl, W-7118 Ingelfingen (DE)
(74) Vertreter: Leyh, Hans, Dr.-Ing.

(56) Entgegenhaltungen:
- FR-A- 1 384 817
- FR-A- 2 362 325
- GB-A- 2 160 950
- US-A- 2 164 669
- US-A- 2 577 851

## Beschreibung

Die Erfindung betrifft ein Sicherheitsventil, insbesondere zur Überdruckabsicherung von Anlagen, die mit gasförmigen und/oder dampfförmigen und/oder flüssigen Fluiden und/oder Gemischen hieraus arbeiten, bestehend aus einem Gehäuse mit Zulaufleitung und Ablaufleitung, einem Ventilsitz und einem in dessen Schließrichtung federbelasteten Ventilelement, das aus einem Sitzventil und einem mit diesem fest verbundenen Schieberkolben gebildet ist, der dem Sitzventil, in Strömungsrichtung gesehen, im Abstand nachgeschaltet ist, und dessen Durchmesser größer ist als der Durchmesser des Ventilsitzes.

Sicherheitsventile dieser Art werden z.B. für die Überdrucksicherung von Behältern und Anlagen verwendet, bei denen Gase, Dämpfe, überhitzte und unterkühlte Flüssigkeiten, z.B. Wasser, in unterschiedlichen Aggregatszuständen gleichzeitig oder nacheinander gegen Drucküberschreitung abzusichern sind.

Aus der FR-A-1384 817 ist nun ein Sicherheitsventil der eingangs genannten Art bekannt. Bei einem solchen Ventil kann es jedoch beim Auftreten von Gegendrücken durch die Änderung der Strömungsverhältnisse zu starken Schwingungen kommen. Außerdem kann im Bereich des Dichtsitzes und des Ventilkegels Erosion und Kavitation auftreten.

Der Erfindung liegt daher die Aufgabe zugrunde, ein Sicherheitsventil der eingangs genannten Art derart weiterzubilden, daß insbesondere auch bei wechselnden Gegendrücken das Auftreten von Schwingungen, Erosion und Kavitation möglichst vermieden, jedenfalls aber reduziert werden.

Nach der Erfindung wird dies dadurch erreicht, daß im Gehäuse eine den Schieberkolben führende Büchse eingebaut ist, die mit einer den Ventilkegel des Sitzventiles umgebenden Kammer sowie einem den Schieberkolben umgebenden Ringkanal versehen ist, der durch Querbohrungen in der Büchse mit der Ablaufleitung verbunden ist.

Hieraus folgt eine Trennung der Funktion von Dichtsitz und Steuerkante. Am Dichtsitz selbst treten bevorzugt nur statische Drücke auf mit dem Vorteil, daß im Bereich von Dichtsitz und Ventilkegel Erosion, Kavitation und Tropfenschlag nicht oder nur vermindert gegenüber bisherigen Ventilen auftreten.

Weitere Merkmale der Erfindung ergeben sich aus den Unteransprüchen.

Beispielsweise Ausführungsformen der Erfindung werden nachfolgend anhand der Zeichnung erläutert, in der
- Figur 1: im Schnitt ein Sicherheitsventil nach der Erfindung im geschlossenen Zustand zeigt.
- Figur 2: zeigt das Ventil nach Figur 1 in teilgeöffnetem Zustand.
- Figur 3: zeigt das Sicherheitsventil nach Figur 1 in voll geöffnetem Zustand.
- Figur 4: zeigt im Schnitt das Sicherheitsventil nach Figur 1 in voll geöffnetem Zustand, wobei dem Ventil eine Entspannungsdüse nachgeschaltet ist.
- Figur 5: zeigt im Schnitt das erfindungsgemäße Ventil in geschlossenem Zustand in Verbindung mit einem durch das Sicherheitsventil zu steuernden Ventil.

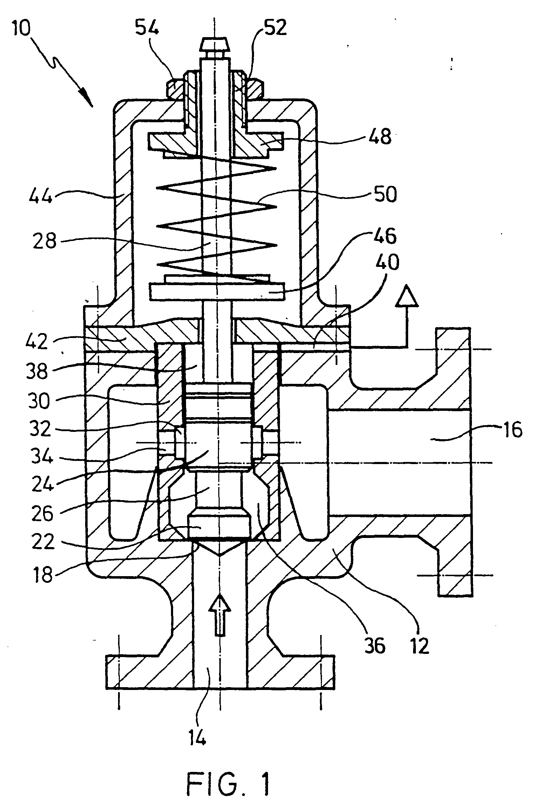

Figur 1 zeigt ein Sicherheitsventil 10 mit einem Gehäuse 12 mit Zulauf 14 und Ablauf 16 und einem Ventilsitz 18.

Mit dem Ventilsitz 18 wirkt ein Ventilelement zusammen, das aus einem Sitzventil mit Ventilkegel 22, der den Ventilsitz 18 öffnet und schließt, sowie einem Schieberkolben 24 gebildet ist, der über einen Schaft 26 mechanisch fest mit dem Ventilkegel 22 verbunden ist. An dem zylindrischen Schieberkolben 24 schließt sich eine Kolbenstange 28 an, die aus dem Ventilgehäuse 12 herausgeführt ist und in eine Federkammer 44 hineinragt, wie noch beschrieben wird.

Zweckmäßigerweise bestehen Ventilkegel 22, Schaft 26, Schieberkolben 24 und Kolbenstange 28 aus einem Stück.

In das Gehäuse 12 ist eine Büchse 30 eingebaut, in der der Schieberkolben 24 axial geführt ist.

Im Bereich des Schieberkolbens 24 ist die Büchse 30 mit einem den Schieberkolben umgebenden Ringkanal 32 versehen, der über wenigstens eine, vorzugsweise mehrere in der Büchse 30 ausgebildete Querbohrungen 34 mit dem Auslaß 16 in Verbindung steht.

Das Gehäuse 12 ist an seiner vom Zulauf 14 abgewandten Seite durch einen Ventildeckel 42 geschlossen, der mit dem Gehäuse geeignet verbunden, zum Beispiel verschraubt, ist und der sowohl zur Fixierung der Büchse 30 als auch zur Hubbegrenzung des Ventilelementes dient.

Die Kolbenstange 28 ist durch eine zentrale Bohrung des Ventildeckels 42 hindurchgeführt (wobei zweckmäßigerweise zwischen Kolbenstange und Ventildeckel eine geeignete Abdichtung, z.B. ein O-Ring, vorgesehen ist) und sie ragt in das Federgehäuse 44 hinein, das ebenfalls zum Beispiel mittels Schrauben am Gehäuse 12 befestigt ist.

Im Federgehäuse 44 ist eine Druckfeder 50, zum Beispiel eine Schraubendruckfeder (oder auch mehrere) angeordnet, welche die Kolbenstange 28 konzentrisch umgibt und zwischen zwei Federtellern 46 und 48 eingespannt ist. Der Federteller 46 ist in beliebig geeigneter Weise fest mit der Kolbenstange 28 verbunden, während der mit einem Gewindestutzen 52 versehene Federteller 48 in eine zentrale Gewindebohrung im Deckelteil des Federgehäuses 44 eingeschraubt und durch eine Kontermutter 54 gesichert ist. Der Federteller 48 kann mehr oder weniger weit in das Federgehäuse 44 eingeschraubt werden, so daß mittels des Gewindestutzens 52 und der Kontermutter 54 die Federvorspannung und damit der Ansprechdruck des Sicherheitsventils eingestellt werden können.

Das erfindungsgemäße Sicherheitsventil arbeitet wie folgt:

Sobald im Zulauf 14 der eingestellte Ansprechdruck erreicht wird, verringert sich die Dichtwirkung am Ventilsitz 18 so weit, daß das Fluid aus dem Zulauf 14 in die Kammer 36 zwischen dem Ventilelement und der Büchse 30 einsickert und die Kammer 36 füllt.

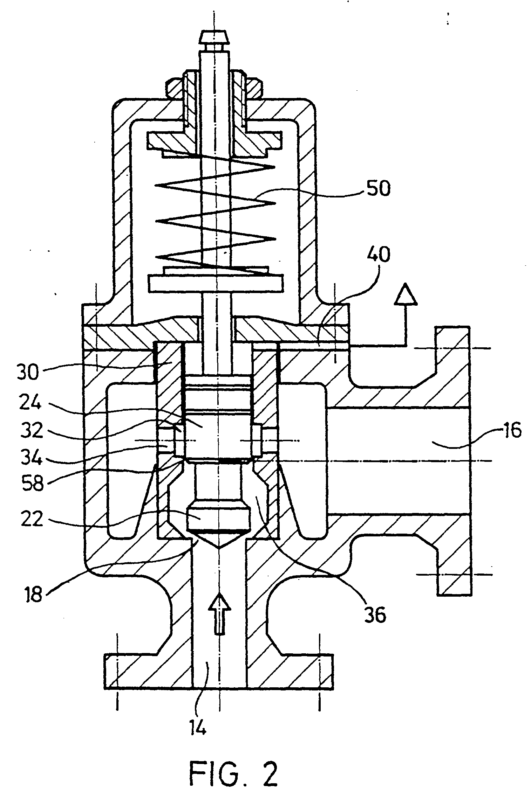

Der Schieberkolben 24 hat einen größeren Durchmesser als der Ventilsitz 18 und diese zusätzliche Ringfläche des Kolbens 24 wird nun durch das Fluid in die Kammer 36 ebenfalls druckbeaufschlagt, so daß der Ventilkegel 22 vom Ventilsitz 18 abgehoben wird, wie in Figur 2 dargestellt ist. Die vom Ringkanal 32 gebildete Steuerkante 58 ist in der Stellung nach Figur 2 durch den Schieberkolben 24 aber noch nicht freigegeben.

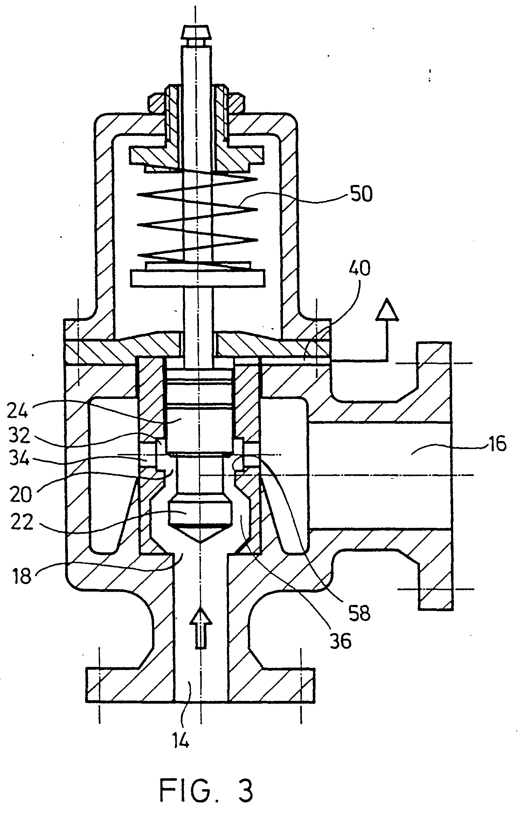

Das Ventilelement bewegt sich nun weiterhin aufwärts und der Schieberkolben 24 gibt die Steuerkante 58 frei, wie in Figur 3 dargestellt ist, und öffnet damit den Ringquerschnitt 20, durch den das Fluid hindurch und über den Ringkanal 32 und die Querbohrungen 34 zum Ablauf 16 strömt.

Das Fluid wird damit im Bereich des Ringquerschnittes 20, des Ringkanals 32 und der Querbohrungen 34 entspannt.

Die erfindungsgemäße Ventilausbildung erlaubt somit jeden beliebigen, etwas unterhalb des Ansprechdrucks liegenden Gegendruck in der Ausgangsleitung 16.

Fällt der Betriebsdruck im Zulauf 14 auf und unter den Ansprechdruck, so wird das Ventilelement durch die Ventilfeder 50 abwärts auf den Ventilsitz 18 zu bewegt, wobei jedoch zunächst der Kolbenschieber 24 die Steuerkante 58 überfährt und den Ringquerschnitt 20 schließt.

Hierdurch wird die Durchströmung des Ventils annähernd auf Null gebracht, worauf bei praktisch stillstehender Strömung das Ventilelement durch die Ventilfeder 50 weiter nach unten bewegt und der Ventilsitz 18 durch den Ventilkegel 22 geschlossen wird.

Erst danach wird der Restdruck in der Kammer 36 unter dem Kolbenschieber 24 über das Kolbenspiel, d.h. das Spiel zwischen Schieberkolben 24 und Büchse 30, abgebaut.

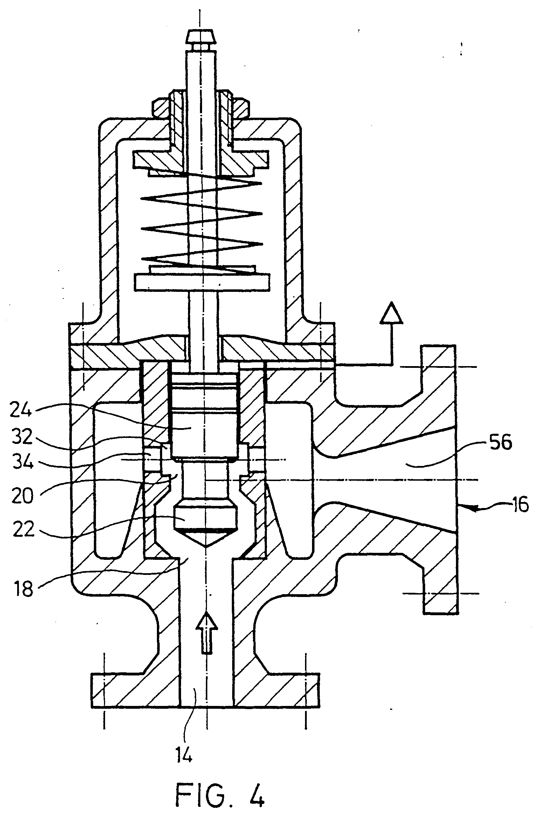

Bei der Ausführungsform nach Figur 4 ist im Auslaß 16 eine Entspannungsdüse 56, zum Beispiel eine Laval-Düse, vorgesehen. Bei dieser Ausführungsform wird das Fluid erst in der Düse 56 entspannt mit der Folge, daß im Ringquerschnitt 20 und praktisch auch im Bereich des Ringkanals 32 und der Querbohrungen 34 im wesentlichen statische Verhältnisse herrschen und daher keine Kavitation auftritt.

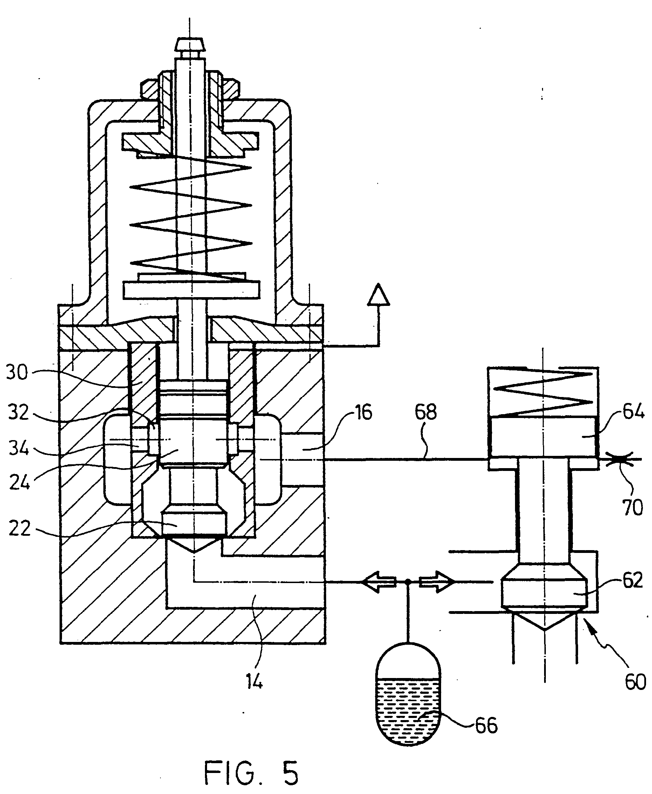

Figur 5 zeigt einen Anwendungsfall für das Sicherheitsventil 10.

Es dient hier als Vorsteuerventil für ein Ventil 60, wobei sowohl das letztere wie auch der Zulauf 14 des Sicherheitsventils 10 an einen Druckhalter, in diesem Fall einen Druckbehälter 66, angeschlossen sind. Das Ventil 60 hat einen Ventilkegel 62, der einen Ventilsitz öffnet und schließt und der fest mit einem federbelasteten Betätigungskolben 64 verbunden ist.

Wenn der Druck im Druckhalter 66 den Ansprechdruck des Sicherheitsventils 10 erreicht oder überschreitet, so öffnet das Ventil, wie oben beschrieben wurde. Der Auslaß 16 des Sicherheitsventiles ist nun über eine Leitung 68 mit einem Raum unterhalb des Betätigungskolben 64 verbunden, wodurch der letztere durch das über die Leitung 68 in diesen Raum einströmende Fluid und gegen die Kraft seiner Feder angehoben und damit der Ventilkegel 62 von seinem Ventilsitz abgehoben und damit der letztere geöffnet wird.

Fällt der Druck und schließt das Sicherheitsventil 10, so kann das Fluid unter dem Betätigungskolben 64 über eine Drossel 70 abströmen mit der Folge, daß der Betätigungskolben 64 abwärts bewegt und der Ventilkolben 62 seinen Ventilsitz wieder schließt.

## Patentansprüche

1. Sicherheitsventil, insbesondere zur Überdruckabsicherung von Anlagen, die mit gasförmigen und/oder dampfförmigen und/oder flüssigen Fluiden und/oder Gemischen hieraus arbeiten, bestehend aus einem Gehäuse (12) mit Zulaufleitung (14) und Ablaufleitung (16), einem Ventilsitz (18) und einem in dessen Schließrichtung federbelasteten Ventilelement, das aus einem Sitzventil und einem mit diesem fest verbundenen Schieberkolben (24) gebildet ist, der dem Sitzventil, in Strömungsrichtung gesehen, im Abstand nachgeschaltet ist, und dessen Durchmesser größer ist als der Durchmesser des Ventilsitzes (18), **dadurch** **gekennzeichnet,** daß im Gehäuse (12) eine den Schieberkolben (24) führende Büchse (30) eingebaut ist, die mit einer den Ventilkegel (22) des Sitzventiles umgebenden Kammer (36) sowie einem den Schieberkolben (34) umgebenden Ringkanal (32) versehen ist, der durch Querbohrungen (34) in der Büchse (30) mit der Ablaufleitung (16) verbunden ist.

2. Sicherheitsventil nach Anspruch 1, **dadurch gekennzeich****net,** daß der Ringkanal (32) mit einer mit dem Schieberkolben (24) zusammenwirkenden Steuerkante (58) versehen ist.

3. Sicherheitsventil nach Anspruch 1 oder 2, **dadurch** **gekennzeichnet,** daß der Schieberkolben (24) auf seiner zum Sitzventil entgegengesetzten Seite zur Atmosphäre druckentlastet ist.

4. Sicherheitsventil nach einem der Ansprüche 1 - 3, **dadurch gekennzeichnet,** daß zur Entspannung des Fluids im Auslaß (16) des Sicherheitsventiles (10) eine Entspannungsdüse (56) vorgesehen ist.

## Claims

1. Safety valve, in particular for excess pressure security for installations which work with gaseous and/or vaporous and/or liquid fluids and/or mixtures of then, consisting of a housing (12) with feed line (14) and drain line (16), a valve seat (18) and a spring-loaded valve element in its direction of flow, which is made up a seat valve and a valve piston (24) solidly connected to it, which is attached downstream at a distance to the seat valve, and the diameter of which is larger than the diameter of the valve seat (18), thereby characterized that a bushing (30) holding the valve piston (24) is installed in the housing (12), which is provided with a chamber (36) enclosing the valve spring (22) of the seat valve as well as a ring channel (32) enclosing the valve piston (34), which is connected with the drain line (16) by means of transverse borings (34) in the bushing (30).

2. Safety valve according to Claim 1, thereby characterized that the ring channel (32) is provided with a control edge (58) interacting with the valve piston (24).

3. Safety valve according to Claim 1 or 2, thereby characterized that the valve piston (24) is pressure-relieved to the atmosphere on the side opposite the seat valve.

4. Safety valve according to one of the Claims 1 - 3, thereby characterized that a relief jet (56) is provided in the drain (16) of the safety valve (10) for relieving the fluid.

## Revendications

1. Soupape de sécurité, notamment pour la protection des installations contre la surpression, installations travaillant avec des fluides gazeux et/ou vaporeux et/ou fluides liquides et/ou melanges à partir de ces fluides, comportant un boîtier (12) avec ligne d'amenée (14) et ligne de sortie (16), un siège de soupape (18) et un élément de soupape à charge de ressort dans sa direction de fermeture qui est conçu d'une soupape de siège et d'un piston curseur (24) rigidement liée avec cette dernière qui est monté en aval à la soupape de siège vu dans le sens d'écoulement et dont le diamètre est supérieur au diamètre de la siège de soupape (18), caractérisé par le fait que dans le boîtier (12) est monté une douille (30) guidant le piston curseur (24) qui est munie d'une chambre (36) entourant la soupape de siège et d'une voie annulaire (32) entourant le piston curseur (34) qui est relié par des forages transversaux (34) dans la douille (30) avec la ligne de sortie (16).

2. Soupape de sécurité selon la revendication 1, caractérisé en ce que la voie annulaire (32) est munie d' une arête de commande (58) travaillant avec le piston curseur (24).

3. Soupape de sécurité selon la revendication 1 ou 2, caractérisé en ce que le piston curseur (24) est déchargé de pression sur son côté opposé à la soupape de siège vers l'atmosphère.

4. Soupape de sécurité selon une des revendications 1 - 3 caractérisé en ce que pour la détente du fluide dans la sortie (16) de la soupape de sécurité (10) est prévue une buse de détente (56).
